**Europäisches Patentamt**

(19) **European Patent Office**

**Office européen des brevets**

(11) Veröffentlichungsnummer: **0 129 903**
**B1**

(12) # EUROPÄISCHE PATENTSCHRIFT

(45) Veröffentlichungstag der Patentschrift:
**16.03.88**

(51) Int. Cl.⁴: **B 01 J  23/22,** C 01 B  17/79

(21) Anmeldenummer: **84107281.2**

(22) Anmeldetag: **25.06.84**

(54) **Verfahren zur Herstellung eines Katalysators für die Oxidation von Schwefeldioxid zu Schwefeltrioxid.**

(30) Priorität: **25.06.83  DE 3322940**

(43) Veröffentlichungstag der Anmeldung:
**02.01.85 Patentblatt 85/1**

(45) Bekanntmachung des Hinweises auf die Patenterteilung:
**16.03.88 Patentblatt 88/11**

(84) Benannte Vertragsstaaten:
**BE DE FR GB IT**

(56) Entgegenhaltungen:
**EP-A-0 019 174**
**US-A-3 107 223**
**US-A-3 186 794**
**US-A-3 962 137**
**US-A-4 126 578**
**US-A-4 294 723**

(73) Patentinhaber: **BASF Aktiengesellschaft, Carl-Bosch- Strasse 38, D-6700 Ludwigshafen (DE)**

(72) Erfinder: **Meissner, Ruprecht, Johannes- Georg-Lehmann- Strasse 8, D-6719 Weisenheim (DE)**
Erfinder: **Neth, Norbert, Dr., Ostring 37, D-6712 Bobenheim- Roxheim (DE)**

**0 129 903**

**Beschreibung**

Vorliegende Erfindung betrifft ein Verfahren zur Herstellung eines Katalysators für die Oxidation von Schwefeldioxid zu Schwefeltrioxid.

Zur Schwefelsäureherstellung in technischem Maßstab wird Schwefeldioxid in Gegenwart von Katalysatoren mit Sauerstoff bzw. sauerstoffhaltigen Gasen zu Schwefeltrioxid oxidiert und dieses anschließend mit Wasser zu Schwefelsäure umgesetzt. Für die Oxidation des Schwefeldioxids werden insbesondere Vanadiumoxid enthaltende Katalysatoren eingesetzt. Diese Katalysatoren bestehen im allgemeinen aus auf Trägersubstanzen, insbesondere amorphen Kieselsäuren, aufgebrachtem Vanadiumpentoxid, wobei zur Aktivierung Alkalimetallverbindungen zugesetzt werden.

Zur Herstellung solcher Katalysatoren sind bereits zahlreiche Verfahren bekannt geworden. Gemäß der DE-PS 1 086 218 bringt man beispielsweise eine gelöste oder suspendierte Verbindung des vier- oder fünfwertigen Vanadiums mit einer wäßrigen Silikatlösung in Berührung und arbeitet in den eine Vanadiumverbindung und Kieselsäure enthaltenden Niederschlag, der sowohl Kalium- als auch Natriumverbindungen enthält, Kieselgur ein. Das erhaltene Produkt wird nach dem Trocknen mit Schwefelsäure behandelt und anschließend calciniert.

Gemäß der DE-PS 1 091 547 geht man von einem frisch gefällten Natrium- und/oder Kaliumionen enthaltenden Kieselsäuregel aus und imprägniert dieses mit einem ebenfalls frisch ausgefällten Natrium- und/oder Kaliumionen enthaltenden Vanadiumpentoxid. Nach dem Trocknen wird das Produkt mit Schwefelsäure in Berührung gebracht und vor der Verwendung calciniert.

Schließlich ist es auch bekannt (Referat Chem. Ztr. Bl. 1963, S 5761) bei der Herstellung von Schwefelsäure-Katalysatoren von einem Gemisch aus Vanadiumpentoxid und Kaliumbisulfat auszugehen, dieses auf 300 bis 400°C zu erhitzen, das pulverisierte Gemisch mit Kieselgur und wenig Wasser zu verkneten und die getrocknete Paste bei 400 bis 800°C zu calcinieren. Anstelle von Kaliumbisulfat kann man auch $K_2S_2O_7$, $K_2S_2O_8$ oder $K_2SO_4$ + $xH_2SO_4$ einsetzen.

In der DE-OS 29 19 662 ist schließlich ein Verfahren zur Herstellung eines Schwefelsäurekatalysators beschrieben, das darin besteht, daß man

a) Vanadiumpentoxid in solchen Mengen von wässerigen Lösungen von Kaliumhydroxid löst, daß das Molverhältnis in der Lösung $V_2O_5$:$K_2O$ von 0,2 bis 0,8 beträgt,

b) die erhaltene Lösung mit Schwefelsäure auf einen pH-Wert < ansäuert, und die erhaltene Suspension

c) unmittelbar anschließend mit einem Träger auf Basis von Kieselsäure zu einer pastösen Masse verarbeitet, mit der Maßgabe, daß das Molverhältnis $SiO_2$:$V_2O_5$ von 13,0 bis 45,0 beträgt

d) die Masse verformt und trocknet und

e) bei Temperaturen von 450 bis 650°C tempert.

Alle beschriebenen Verfahren sollen dazu dienen, einen sowohl bei hohen als auch bei tiefen Temperaturen hochaktiven Katalysator herzustellen, wobei die Aktivität in erster Linie von der Zusammensetzung der Aktivkomponente, deren Menge und der Porosität des fertigen Kontakts abhängen.

Darüber hinaus muß jedoch der Katalysatorformling äußerst widerstandsfähig gegen mechanische Beanspruchung beim Transport vom Hersteller zum Anwender, bei der Einfüllung in den Reaktor und nicht zuletzt beim Betrieb selbst sein, das heißt, der Formling muß eine hohe Festigkeit und geringen Abrieb haben.

Es ist bekannt (Sulphur 138, September/Oktober 1978, Seite 39), daß bei den auf dem Markt erhältlichen Katalysatoren mechanische Robustheit und hohe Aktivitätswerte einander oft entgegenlaufen. So bringen normalerweise hohe Porositätswerte, die für hohe Aktivitäten unerläßlich sind, hohe Abriebswerte und geringe Härten mit sich.

Der vorliegenden Erfindung lag daher die Aufgabe zugrunde, ein Verfahren für die Herstellung eines Katalysators für die Oxidation von Schwefeldioxid zu Schwefeltrioxid, bereitzustellen, bestehend aus einem Träger auf Basis Kieselsäure und darauf aufgebrachter aktiver Substanz, enthaltend Vanadium- und Alkalimetallverbindungen, durch Lösen von Vanadiumpentoxid in Alkalilösungen, Ansäuern der Lösungen mit Schwefelsäure, Vermischen der angesäuerten Lösung mit dem Träger, Verformung der Mischung, Trocknen und Calcinieren. Dieser Katalysator soll neben einer hohen katalytischen Aktivität gleichzeitig eine hohe mechanische Festigkeit und eine gute Hochtemperatur-Standzeit besitzen.

Es wurde gefunden, daß diese Aufgabe dadurch gelöst werden kann, daß man

a) Vanadiumpentoxid-Lösungen einsetzt, die zusätzlich ein gelöstes Alkalisilikat und/oder Kieselsäuresol enthalten,

b) diese Lösungen mit Schwefelsäure auf pH < 2 bringt, indem man die Lösungen in die benötigte Menge vorgelegter Schwefelsäure einbringt, wobei man Temperaturen unterhalb 35°C einhält,

c) die angesäuerte Lösung unmittelbar anschließend mit dem festen Träger auf Basis Kieselsäure zu einer feuchtkrümeligen Masse verarbeitet und unmittelbar anschließend verformt, mit der Maßgabe, daß

d) die feuchtkrümelige Masse einen $V_2O_5$-Gehalt von 2 bis 6 Gew.-%, einen $H_2O$-Gehalt von 35 bis 45 Gew.-% und einen Gesamt-$SiO_2$-Gehalt von 15 bis 50 Gew.-% aufweist, wobei von 5 bis 25 % der Gesamtkieselsäure mit der Lösung aus a) in die feuchtkrümelige Masse eingebracht worden sind.

Zum Unterschied von den bisher bekannten Verfahren zur Herstellung von Schwefelsäure-Katalysatoren wird bei dem erfindungsgemäßen Verfahren die Kieselsäure-Komponente nicht ausschließlich in Form des Trägers eingebracht, sondern auch in Form von gelöstem Wasserglas und/oder Kieselsäuresol, die der alkalischen Vanadatlösung zugegeben werden, bevor diese angesäuert wird. Durch den so eingebrachten Kieselsäureanteil werden die Eigenschaften des fertigen Katalysators günstig beeinflußt. Wesentlich ist dabei

2

**0 129 903**

aber, daß die Gelierung des so eingebrachten Kieselsäureanteils erst dann erfolgt, wenn die Verformung der Katalysatormasse erfolgt ist.

Zur Vermeidung einer vorzeitigen Gelierung dieses mit der Vanadat-Lösung eingebrachten Kieselsäure-Anteils dürfen bei der Ansäuerung der alkalischen Vanadatlösung mit Schwefelsäure Temperaturen von 35° C nicht überschritten werden. Es ist ferner wesentlich, daß die pH-Werte < 2 sprunghaft unterschritten werden, d.h., die Schwefelsäure vorgelegt wird und die kieselsäurehaltige alkalische Vanadatlösung unter guter Durchmischung in die Schwefelsäure eingebracht wird. Gleichzeitig trägt man dafür Sorge, daß durch Kühlung der Reaktionslösung eine Temperatur von 35° C nicht überschritten wird.

Die so erhaltene angesäuerte Lösung wird unmittelbar anschließend mit dem Träger auf Basis Kieselsäure, vorzugsweise Kieselgur, vermischt und die Mischung ebenfalls unmittelbar anschließend, z. B. durch Strangpressen oder Tablettieren, verformt. Dadurch wird verhindert, daß eine vorzeitige Gelierung des mit der Vanadat-Lösung eingebrachten Kieselsäureanteils eintritt, da die Gelierung nicht nur eine Funktion der Temperatur und des pH-Wertes, sondern auch der Zeit ist. Selbstverständlich soll auch bei Einarbeitung des Trägers und der anschließenden Verformung die Temperatur der Masse nicht über 35° C ansteigen. Nach unten sind den einzuhaltenden Temperaturen praktisch nur Grenzen durch die Verfestigungstemperaturen der angewendeten Lösungen gesetzt, die aber aus wirtschaftlichen Gründen nicht erreicht werden. Man arbeitet daher in der Regel in einem Temperaturbereich von 15 - 30° C, sowohl bei der Neutralisierung als auch bei der Einarbeitung des Kieselsäureträgers und der anschließenden Verformung.

Man setzt die Ausgangskomponenten Vanadinsäure und Kieselsäure, letztere sowohl in Form des Wasserglases bzw. des Kieselsäuresols als auch in Form des festen Trägers in solchen Mengen ein, daß die bei der Vermischung der alkalischen Vanadat-Lösung mit dem Kieselsäureträger entstehende feuchtkrümelige Masse einen $V_2O_5$-Gehalt von 2 - 6 Gew.-% und einen Gesamt-$SiO_2$-Gehalt von 15 bis 50 Gew.-% aufweist. 5 bis 25 Gew.-% des Gesamtkieselsäuregehaltes stammen aus dem mit der Vanadiumpentoxid- (bzw. Vanadat)-Lösung eingebrachten Wasserglas bzw. Kieselsäuresol. Die Wassergehalte der in flüssiger Form eingebrachten Komponenten, nämlich der Laugen, des Wasserglases bzw. des Kieselsäuresols und der Schwefelsäure werden so eingestellt, daß die feuchtkrümelige Masse einen $H_2O$-Gehalt von 35 bis 45 Gew.-% aufweist. Die Laugen und das Wasserglas bzw. das Kieselsäuresol setzt man möglichst konzentriert ein, während man die Konzentration der Schwefelsäure so wählt, daß sie etwa 20 - 40 Gew.-% beträgt, um die Temperatur während der Umsetzung besser kontrollieren zu können.

Mit dem Wassergehalt der feuchtkrümeligen Masse hat man es im übrigen in der Hand, die Porosität des fertigen Katalysators zu beeinflussen in der Weise, daß bei Wassergehalten an der oberen Grenze des genannten Bereiches der Katalysator eine höhere Porosität aufweist als bei Verarbeitung von Massen, deren Wassergehalt in der Nähe der unteren Grenze liegt.

Die erfindungsgemäßen Katalysatoren enthalten neben $V_2O_5$ und $SiO_2$, wie üblich und bekannt, noch $Na_2O$ und $K_2O$. Der $Na_2O$-Anteil in der feuchtkrümeligen Masse kann 0,3 - 2,5 Gew.-% und der $K_2O$-Anteil 5,0 - 11 Gew.-% betragen.

Die Alkali-Komponenten werden mit dem Wasserglas, das sowohl Kalium- als auch Natriumwasserglas sein kann, oder mit der Lauge, KOH oder NaOH, in die Mischung eingebracht.

Die Einarbeitung des Kieselsäureträgers in die angesäuerte Vanadat-Lösung erfolgt in Mischern, wobei darauf zu achten ist, daß der Mischvorgang abgebrochen wird, wenn die Mischung eine feuchtkrümelige Konsistenz erreicht hat. Die rieselfähige Mischung läßt sich mittels Strangpressen und dgl. verformen. Bei zu langem Mischen wird die Mischung pastös und läßt sich dann nicht oder nur schwer verformen. Die Masse kann zu Vollsträngen von z. B. 2 bis 10 mm Durchmesser oder auch zu Hohlsträngen verarbeitet werden.

Die Katalysatorformlinge werden dann bei Temperaturen von 100 bis 150° C getrocknet. Durch die Temperaturerhöhung wird gleichzeitig erreicht, daß die mit dem Wasserglas bzw. Kieselsäuresol eingebrachte Kieselsäure geliert. Auf diese Weise bildet sich ein Kieselsäuregerüst, durch das die mechanischen Eigenschaften des erfindungsgemäß hergestellten Katalysators außerordentlich günstig beeinflußt werden.

Nach dem Trocknen werden die Katalysatorformlinge wie üblich bei Temperaturen von 350 bis 650° C calciniert.

Abgesehen von den mechanischen Eigenschaften zeigt der erfindungsgemäß hergestellte Katalysator auch eine hohe Aktivität, was u.a. auf die errichbaren hohen Porenvolumina und auf die feine Verteilung der aktiven Masse in der Trägersubstanz zurückzuführen sein dürfte. Diese feine Verteilung dürfte auch darin begründet sein, daß unter den erfindungsgemäßen Bedingungen auch die Vanadin-Komponente erst bei der Trocknung ausgefällt wird, d.h. bis nach der Verformung in gelöstem Zustand vorliegt und somit eine gute Verteilung gewährleistet ist.

Als Bewertungskriterien für die Qualität des Katalysators werden in den Beispielen der Umsatz, der spezifische Umsatz, das Porenvolumen, die Schneidehärte, der Abrieb und die Hochtemperatur-Standzeit herangezogen.

Die Werte für diese Größen werden folgendermaßen bestimmt:

a) Bestimmung des Umsatzes

Der Umsatz U (%) von $SO_2$ zu $SO_3$ wird durch Messung des $SO_2$-Gehaltes im Eingangs- und Ausgangsgas eines Reaktors bestimmt. Die $SO_2$-Gehalte werden durch Titration mit einer Chloraminlösung ermittelt. Als Meßwerte dienen die für das Entfärben von 10 ml einer 0,1 n Chloraminlösung erforderlichen Gasvolumina.

Die $SO_2$-Oxidation erfolgt in zwei in Reihe geschalteten Reaktoren, in denen jeweils ein konstanter Vorumsatz (ca. 87 %) und der Endumsatz erfolgt.

3

Das Katalysator-Bettvolumen beträgt ca. 100 ml.

Die Gaszusammensetzung beträgt     7,5  Vol% $SO_2$
                                    11,0  Vol% $O_2$
                                    81,5  Vol% $N_2$

b) Bestimmung des spezifischen Umsatzes

Um einen eventuellen Einfluß der eingesetzten Menge an Aktivkomponente zu berücksichtigen, kann für eine Beurteilung der Aktivität des Katalysators der spezifische Umsatz herangezogen werden.

Unter dem spezifischen Umsatz versteht man den auf die Menge eingesetzten Vanadiumpentoxids bezogenen Umsatz an $SO_2$ in Prozent pro Gramm $V_2O_5$.

c) Bestimmung des Porenvolumens

20 g des Katalysators werden in einem 100 ml Becherglas mit Toluol überstellt und abgedeckt. Wenn kein Ausgasen mehr zu beobachten ist, wird das Toluol abgegossen und die Probe zurückgewogen (G in g).

Porenvolumen $= \frac{G - 20}{17,2}$ in $\frac{cm^3}{g}$

d) Bestimmung der Schneidehärte

Es wird die Kraft gemessen, die zur Durchtrennung eines Strangpreßlings mit einer 0,3 mm-Schneide erforderlich ist.

Die Schneide wird mit einem Vorschub von 14 mm/Minute bewegt. Die Kraft wird mit einem Dehnungsmeßstreifen erfaßt.

Es werden insgesamt 25 Strangpreßlinge durchtrennt. Von den ermittelten Kräften wird der Mittelwert gebildet.

e) Bestimmung des Abriebes

Die Probe wird über ein 2 mm-Sieb abgesiebt. 100 g der nicht abgesiebten Probe werden in einen 1 l-Behälter eingewogen; dazu werden 30 g Porzellankugeln (10 bis 11 mm Durchmesser) gegeben. Der Behälter wird verschlossen und 2 Stunden lang auf einer Schwingmühle mit 1400 Umdrehungen pro Minute und einer Amplitude von 10 mm bewegt. Danach wird der Anteil kleiner 2 mm bestimmt. Dieser Wert - bezogen auf die eingesetzte Menge - ergibt den Abrieb.

f) Bestimmung der Hochtemperatur-Standzeit

Ca. 120 g des Katalysators werden in ein 250 ml Reaktorrohr eingebaut. Das Rohr wird in einem Salzbadofen auf ca. 700°C aufgeheizt und mit ca. 3 l/h eines Gases der Zusammensetzung 10 Vol% $SO_2$, 11 Vol% $O_2$ und 79 Vol% $N_2$ beaufschlagt.

Danach wird der Abrieb der gesamten Probe, wie unter e) beschrieben, als Funktion der Standzeit bestimmt. Jede Probe wird nur einmal eingebaut.

Die in den Beispielen gemachten Prozentangaben sind, falls nicht anders vermerkt, Gewichtsprozente.

**Beispiel 1**

A) Festigkeit erhöhende Komponente: Natron-Wasserglas

In 58 kg Natron-Wasserglas (27,8 % $SiO_2$, Mol-Verh. $SiO_2$ : $Na_2O$ = 3,44) werden 41,5 kg einer 56 %-igen Kalilauge eingerührt. Hierin werden 13,5 kg eines 90 %-igen Vanadiumpentoxides gelöst. Die alkalische Vanadiumlösung wird zu 112 l einer vorgelegten 37 gew.-%-igen Schwefelsäure unter kräftiger Durchmischung langsam zugegeben. Die entstehende Wärme muß dabei soweit abgeführt werden, daß eine Temperatur von 35°C nicht überschritten wird. Man erhält hierdurch eine Lösung, in der das $SiO_2$ nicht geliert. Die so entstandene Lösung wird 92 kg einer in einem schnellaufenden Mischer vorgelegten Kieselgur zugegeben und mit dieser vermischt. Die Mischung muß schnell und gründlich, ohne Anwendung großer Scherkräfte erfolgen und nur bis zu einem Stadium, in dem die Mischung noch feuchtkrümelig und rieselfähig ist.

Die Mischung wird anschließend zu Strängen mit einem Durchmesser von 6 mm extrudiert. Die Stränge werden bei 130°C getrocknet und bei einer Temperatur von 600°C calciniert. Die Eigenschaften der so erhaltenen Katalysatoren sind in der folgenden Tabelle 1 zusammengestellt und gegen Beispiel 1B verglichen.

B) Vergleichsbeispiel

17,8 kg Vanadiumpentoxid (90 %-ig) werden mit 60,3 kg Kalilauge (48 %-ig) gelöst und die Lösung anschließend mit 5,0 kg 98 gew.-%-iger NaOH versetzt. Die Lösung wird wie in A) beschrieben zu 120,5 kg 32 gew.-%-iger Schwefelsäure zugegeben.

Unmittelbar anschließend wird die Suspension mit 113 kg Kieselgur zu einer homogenen Masse verknetet und anschließend zu Strängen mit einem Durchmesser von 6 mm extrudiert. Die Stränge werden bei 130°C getrocknet, zerteilt und bei einer Temperatur von 600°C calciniert. Die Eigenschaften des erhaltenen Produktes sind in Tabelle 2 aufgeführt.

In der folgenden Tabelle 1 sind die Gehalte der beiden Katalysatoren an den einzelnen Komponenten im fertigen calcinierten Katalysator, und in der feuchtkrümeligen Masse (in der Tabelle als Mischung bezeichnet) sowie die Menge der Einsatzstoffe (100 %-ig) und nach dem Rezept aufgeführt.

# 0 129 903

**Tabelle 1**

Beispiel A

| | Gehalt/% des fertigen calcinierten Kat. | kg (100 %-ig) | Gehalt/% in der Mischung | Rezept kg |
|---|---|---|---|---|
| $V_2O_5$ | 6.1 | 12. | 153. | 513,0 $V_2O_5$ 90 %-ig |
| $K_2O$ | 9.9 | 19. | 55. | 641.5 KOH 56 %-ig |
| $Na_2O$ | 2.4 | 4. | 81. | 4aus dem Wasserglas |
| $(H_2)SO_4$ | 26.8 | 53. | 115. | 4143.5 $H_2SO_4$ 37 %-ig (= 112 l) |
| Kieselgur | 46.5 | 92. | 026. | 792 Gur |
| $SiO_2$ | 8.1 | 16. | 14. | 858 Na-Wassergl. 27 %-ig |
| $H_2O$ | - | 147. | 042. | 6- |

Beispiel B

| | | | | |
|---|---|---|---|---|
| $V_2O_5$ | 7.9 | 16. | 05. | 117.8 $V_2O_5$ 90 %-ig |
| $K_2O$ | 12.0 | 24. | 37. | 760.3 KOH 48 %-ig |
| $Na_2O$ | 2.4 | 4. | 91. | 65.0 NaOH 98 %-ig |
| $H_2SO_4$ | 22.0 | 44. | 614. | 1120.5 $H_2SO_4$ 37 %-ig |
| Kieselgur | 55.7 | 113. | 035. | 7113.0 Gur |
| $H_2O$ | - | 113. | 836. | 0- |

**Tabelle 2**

| | $V_2O_5$/% | $U_{450°C}$/% | $U_{spec.}$/%g$^{-1}$ | Porenvolumen /cm$^3$g$^{-1}$ | Härte /kg | Abrieb/% neu | nach 50 Tagen |
|---|---|---|---|---|---|---|---|
| Bsp.A | 6,4 | 95,5 | 29,3 | 0,72 | 5,9 | 0,6 | 13,8 |
| Bsp.B | 7,9 | 94,3 | 18,4 | 0,48 | 4,8 | 1,2 | 28,0 |

In der Tabelle 2 sind die Eigenschaften des gemäß A) und B) hergestellten Katalysatoren miteinander verglichen. Die beiden Beispiele unterscheiden sich dadurch voneinander, daß gemäß A) neben dem Kieselsäureträger auch eine Wasserglaslösung eingearbeitet wird, die erst bei der Trocknung zum Gelieren gebracht wird, während der Katalysator gemäß B) als Kieselsäure ausschließlich die Komponente enthält, die mit dem Träger eingebracht worden ist.

Es zeigt sich, daß der Katalysator nach A)
- eine höhere Aktivität bei geringerem Aktivkomponentengehalt,
- und eine größere Härte und besseres Standzeitverhalten aufweist.

**Beispiel 2**

Festigkeit erhöhende Komponente: Kieselsol (40 Gew.-% $SiO_2$ in $H_2O$)

Es wird analog Beispiel 1A verfahren mit der Ausnahme, daß statt Natron-Wasserglas 40,5 kg eines 40 gew.-%-igen Kieselsols eingesetzt werden und zu Beginn 4,6 kg $Na_2O$ in Form von NaOH zugesetzt werden.

Auch hier zeigen die fertigen 6 mm-Stränge höhere Härten bei gestiegenem Porenvolumen und einen höheren spezifischen Umsatz wie der folgenden Tabelle 3 zu entnehmen ist.

**Tabelle 3**

| | $V_{spez.}/\%g^{-1}$ | Porenvolumen /$cm^3g^{-1}$ | Härte /kg | Abrieb /% |
|---|---|---|---|---|
| Bsp.2 | 24,7 | 0,67 | 6,3 | 2,0 |
| Bsp.1B | 18,4 | 0,48 | 4,5 | 1,5 |

**Beispiel 3**

Festigkeit erhöhende Komponente: Kali-Wasserglas

In 88,5 kg eines verdünnten Kali-Wasserglases (24,4 % $SiO_2$, Mol-Verh. $SiO_2$ : $K_2O$ = 3,48) werden 22,4 kg einer 48 gew.-%-igen Kalilauge eingerührt. Hierin werden 6,3 kg festes NaOH und 13,5 kg eines 90 gew.-%-igen Vanadiumpentoxides gelöst. Zu 143,5 kg einer 37 %-igen Schwefelsäure wird die alkalische Vanadiumlösung analog Beispiel 1A zugegeben und mit 86,5 kg einer Kieselgur zu Hohlsträngen mit 10 mm Außendurchmesser und 5 mm Innendurchmesser verarbeitet. Die Eigenschaften des erhaltenen Produktes sind in Tabelle 4 einem analog Beispiel 1B hergestellten Hohlstrang gleicher Abmessungen gegenübergestellt.

**Tabelle 4**

| | $V_2O_5$ /% | Umsatz $V_{450°}$/% | $V_{spez.}/\%g^{-1}$ | Poren-volymen /$cm^3g^{-1}$ | Härte /kg | Abrieb neu |
|---|---|---|---|---|---|---|
| Bsp. 3 analog | 6,4 | 86,2 | 25,9 | 0,54 | 8,1 | 3,1 |
| Bsp. 1B | 7,9 | 85,6 | 19,7 | 0,48 | 5,8 | 3,5 |

Die Ergebnisse zeigen, daß das erfindungsgemäße Verfahren sich neben den bereits in Beispielen 1A und 2 beschriebenen Vorteilen auch dadurch auszeichnet, daß sich sehr gut dünnwandige Formkörper mit großer Härte herstellen lassen.

In der folgenden Tabelle 5 sind die Gehalte der einzelnen Bestandteile im fertigen Katalysator und in der feuchtkrümeligen Masse (Mischung genannt) sowie die Menge der Einsatzstoffe (100 %ig) und der tatsächlichen Rezeptur zusammengestellt.

**Tabelle 5**

| | Gehalt/% des fertigen calcinierten Katalysators | Einsatz-stoffe kg (100 %-ig) | Gehalt/g der Mischung | Rezept kg |
|---|---|---|---|---|
| $V_2O_5$ | 6,1 | 12,1 | 3,6 | 13,5 $V_2O_5$ 90 %-ig |
| $K_2O$ (WE) | | 9,75 | | aus Wasserglas |
| $K_2O$ | 10,6 | 11,3 | 5,8 | 22,4 KOH 60 %-ig |
| $Na_2O$ | 2,4 | 4,8 | 1,3 | 6,3 NaOH 98 %-ig |
| $(H_2)SO_4$ | 26,7 | 53,1 | 14,7 | 143,5 $H_2SO_4$ 37 %-ig |
| Gur | 43,4 | 86,5 | 24,0 | 86,5 Gur |
| $SiO_2$ (WG) | 10,6 | 21,6 | 6,0 | 88,5 K-Wasserglas 24 %-ig |
| $H_2O$ | | 161.6 | 44.8 | |

**Patentansprüche**

1. Verfahren zur Herstellung eines Katalysators für die Oxidation von Schwefeldioxid zu Schwefeltrioxid, bestehend aus einem Träger auf Basis Kieselsäure und darauf aufgebrachter aktiver Substanz, enthaltend Vanadium- und Alkalimetallverbindungen, durch Lösen von Vanadiumpentoxid in Alkalilösungen, Ansäuern der Lösungen mit Schwefelsäure, Vermischen der angesäuerten Lösung mit dem Träger, Verformung der Mischung, Trocknen und Calcinieren, <u>dadurch gekennzeichnet</u>, daß man

a) Vanadiumpentoxid-Lösungen einsetzt, die zusätzlich ein gelöstes Alkalisilikat und/oder Kieselsäuresol enthalten,

b) diese Lösungen mit Schwefelsäure auf pH < 2 bringt, indem man die Lösungen in die benötigte Menge vorgelegter Schwefelsäure einbringt, wobei man Temperaturen unterhalb 35°C einhält,

c) die angesäuerte Lösung unmittelbar anschließend mit dem festen Träger auf Basis Kieselsäure zu einer feuchtkrümeligen Masse verarbeitet und unmittelbar anschließend verformt, mit der Maßgabe, daß

d) die feuchtkrümelige Masse einen $V_2O_5$-Gehalt von 2 bis 6 Gew.-%, einen $H_2O$-Gehalt von 35 bis 45 Gew.-% und einen Gesamt-$SiO_2$-Gehalt von 15 bis 50 Gew.-% aufweist, wobei von 5 bis 25 % der Gesamtkieselsäure mit der Lösung aus a) in die feuchtkrümelige Masse eingebracht worden sind.

2. Verfahren nach Anspruch 1, <u>dadurch gekennzeichnet</u>, daß die Schwefelsäure eine Konzentration von 20 bis 40 Gew.-% aufweist.

3. Verfahren nach Ansprüchen 1 bis 2, <u>dadurch gekennzeichnet</u>, daß man Temperaturen von 15 bis 30°C einhält.

## Claims

1. A process for the preparation of a catalyst for the oxidation of sulfur dioxide to sulfur trioxide, consisting of a silica-based carrier and applied thereto, an active substance containing vanadium and alkali metal compounds, by dissolving vanadium pentoxide in an alkali solution, acidifying the solution with sulfuric acid, mixing the acidified solution with the carrier, molding the mixture, drying and calcining, wherein

a) the vanadium pentoxide solution used additionally contains a dissolved alkali metal silicate and/or silica sol,

b) this solution is brought to pH < 2 with sulfuric acid by initially charging the required amount of sulfuric acid and introducing the solution into this, the temperature being kept below 35°C, and

c) the acidified solution is immediately mixed with the solid silica-based carrier to give a moist crumbly material which is then immediately molded, with the proviso that,

d) the moist crumbly material contains from 2 to 6 % by weight of $V_2O_5$ and from 35 to 45 % by weight of $H_2O$ and has a total $SiO_2$ content of from 15 to 50 % by weight, from 5 to 25 % by weight of the total silica having been introduced into the moist crumbly material together with the solution from a).

2. A process as claimed in claim 1, wherein the sulfuric acid has a concentration of from 20 to 40 % by weight.

3. A process as claimed in claims 1 and 2, wherein the temperature is kept at 15-30°C

## Revendications

1. Procédé de préparation d'un catalyseur pour l'oxydation de l'anhydride sulfureux en anhydride sulfurique, constitué d'un support à base d'acide silicique et de substance active, comprenant des dérivés du vanadium et de métaux alcalins, déposée sur celui-ci, par dissolution de pentoxyde de vanadium dans des solutions d'alcalis, acidification des solutions avec de l'acide sulfurique, mélange de la solution acidifiée et du support, formage du mélange, séchage et calcination, caractérisé en ce que:

a) on met en oeuvre des solutions de pentoxyde de vanadium, qui contiennent en outre un silicate de métal alcalin et(ou) un sol d'acide silicique,

b) on amène le pH de ces solutions à l'aide d'acide sulfurique à une valeur inférieure à 2 en les introduisant dans le volume voulu d'acide sulfurique et en maintenant la température inférieure à 35°C,

c) on transforme immédiatement la solution acidifiée avec le support solide à base d'acide silicique en une masse grumeleuse humide, que l'on façonne immédiatement, avec la mesure que

d) la masse grumeleuse humide possède une teneur en $V_2O_5$ de 2 à 6 % en poids, une teneur en eau de 35 à 45 % en poids et une teneur totale en $SiO_2$ de 15 à 50 % en poids, entre 5 et 25 % de la quatité totale d'acide silicique étant amenés dans la masse grumeleuse humde par la solution a).

2. Procédé suivant la revendication 1, caractérisé en ce que l'acide sulfurique possède une concentration comprise entre 20 et 40 % en poids.

3. Procédé suivant les revendications 1 et 2, caractérisé en ce que l'on maintient les températures entre 15 et 30°C.